# EUROPÄISCHE PATENTANMELDUNG

(11) **EP 2 225 935 A2**
(43) Veröffentlichungstag der Anmeldung: **08.09.2010**
(21) Anmeldenummer: 09178455.3
(22) Anmeldetag: 09.12.2009
(51) Int. Cl.: A01K 1/015

(54) **Belagsmatte für einen Stallbodenbelag**

(30) Priorität: 04.03.2009 DE 202009003082 U
(71) Anmelder: Gummiwerk Kraiburg Elastik GmbH, 84529 Tittmoning (DE)
(72) Erfinder: Klinger, Martin, 84489 Burghausen (DE); Steinberger, Rupert, 84570 Polling (DE); Stadler, Reinhold, 84561 Mehring (DE); Stribl, Michael, 84450 Feichten (DE); Benz, Barbara, 84508 Hirten (DE)
(74) Vertreter: Ruttensperger, Bernhard

(57) **Zusammenfassung**

Eine Belagsmatte für einen Stallbodenbelag umfasst einen mit elastischem Material aufgebauten Mattenkörper (24) mit in einem oberflächennahen Bereich eingebetteten Hartstoffpartikein (26).

## Beschreibung

Die vorliegende Erfindung betrifft eine Belagsmatte für einen Stallbodenbelag und einen Stallboden mit einem wenigstens eine Belagsmatte aufweisenden Stallbodenbelag.

Um in Tierställen, insbesondere in Rinderställen, für die Tiere zum Begehen angenehme, an die natürliche Umgebung angepasste Bedingungen bereitzustellen, ist es bekannt, die traditionell eingesetzten Betonböden zu ersetzen bzw. zu überdecken mit einem Stallbodenbelag, der aus vergleichsweise weichem Material aufgebaut ist. Hier haben sich vor allem Stallbodenbeläge aus elastischem bzw. gummielastischem Material als besonders vorteilhaft erwiesen, und zwar sowohl hinsichtlich der Haltbarkeit, als auch hinsichtlich des Komforts für die einen derartigen Boden betretenden bzw. darauf liegenden Tiere.

Ein Problem bei derartigen vergleichsweise weichen Stallbodenbelägen ist, dass die im Bereich der Hufe bzw. Klauen auftretende Abnutzung nicht mehr der in natürlicher Umgebung auftretenden Abnutzung entspricht, wie dies bei für die Klauengesundheit ansonsten grundsätzlich nachteilhaften Betonböden der Fall ist.

Um dem entgegenzutreten, ist es aus der DE 20 2005 019 072 U1 bekannt, Stallbodenbeläge in den durch die Rinder betretenden Bereichen aus fließfähigem, elastischem, nach dem Ausbringen dann aushärtendem Material aufzubauen, in welches noch vor dem Aushärten Hartstoffpartikel eingebracht werden. Ein Teil dieser Hartstoffpartikel verbleibt im oberflächennahen Bereich und entfaltet beim Betreten eine die Klauengesundheit fördernde abrasive Eigenschaft. Da die Hartstoffpartikel hier in noch nicht ausgehärtetes Material eingebracht werden, kann insbesondere deren oberflächennah verbleibender Anteil nur schwer beeinflusst werden, so dass die abrasive Eigenschaft nur vergleichsweise ungenau vorgegeben bzw. eingestellt werden kann.

Es ist die Aufgabe der vorliegenden Erfindung, eine Belagsmatte für einen Stallbodenbelag vorzusehen, welche bei hohem Komfort eine die Klauengesundheit fördernde Eigenschaft aufweist.

Erfindungsgemäß wird diese Aufgabe gelöst durch eine Belagsmatte für einen Stallbodenbelag, umfassend einen mit elastischem Material aufgebauten Mattenkörper mit in einem oberflächennahen Bereich eingebetteten Hartstoffpartikeln.

Die vorliegende Erfindung sieht also Belagsmatten vor, die als solche vorgefertigt und dann auf einem vorbereiteten Untergrund, beispielsweise einem Betonboden, ausgelegt werden können. Auf diese Art und Weise wird es möglich, den Herstellungvorgang auch insbesondere hinsichtlich der Dichte der Hartstoffpartikel im oberflächennahen Bereich definiert aufzubauen und damit auch die abrasive Eigenschaft definiert einzustellen. Gleichzeitig wird auf Grund des Aufbaus des Mattenkörpers aus elastischem Material eine insbesondere zum Begehen bzw. auch zum Liegen komfortable Eigenschaft erhalten.

Eine aus Kostengründen und auch hinsichtlich der erhaltbaren Haltbarkeit bzw. Stabilität der Belagsmatten besonders vorteilhafte Variante kann vorsehen, dass der Mattenkörper mit miteinander verbundenen Gummigranulatpartikeln aufgebaut ist, wobei vorzugsweise die Gummigranulatpartikel durch Wiederaufbereitung von Altgummi gewonnen sind.

Die Gummigranulatpartikel können miteinander durch Vulkanisieren oder durch Haftmaterial, vorzugsweise Polyurethan-Material, verbunden sein.

Eine auch unter den auftretenden Belastungen lang haltbare, stabile Einbettung der Hartstoffpartikel in den elastischen Mattenkörper kann dadurch sichergestellt werden, dass der Mattenkörper in seinem die Hartstoffpartikel enthaltenden Volumenbereich mit bei seiner Herstellung erstmals vernetztem Neugummimaterial aufgebaut ist. Der Einsatz eines beim Aufbau eines derartigen Mattenkörpers erstmal vernetzten Neugummimaterials führt zu einer verbesserten Anbindung bzw. Einbettung der Hartstoffpartikel.

Dazu ist es von besonderem Vorteil, wenn die mit dem Neugummimaterial aufgebaute Lage des Mattenkörpers eine Dicke aufweist, die im Bereich der Partikelgröße der Hartstoffpartikel ist.

Die Hartstoffpartikel können beispielsweise Korundpartikel, Quarzpartikel oder/und Siliziumkarbidpartikel umfassen.

Weiter ist vorzugsweise vorgesehen, dass die Hartstoffpartikel nahe einer zum Betreten durch Tiere ausgebildeten Oberseite des Mattenkörpers vorgesehen sind, wobei insbesondere auch zum Erhalt einer ausreichend elastischen Eigenschaft des Mattenkörpers vorgeschlagen wird, dass die Hartstoffpartikel im Wesentlichen nur nahe der Oberseite vorgesehen sind.

Die Haftstoffpartikel können eine Größe im Bereich von 1 mm bis 4 mm, vorzugsweise etwa 2 mm, aufweisen. Es ist hier darauf hinzuweisen, dass dies eine Größenangabe ist, welche bei der Vielzahl der in einer derartigen Belagsmatte vorhandenen Hartstoffpartikel nicht für alle, jedoch vorzugsweise den größten Teil, also mindestens etwa 50% bis 80% der Hartstoffpartikel, zutreffen sollte.

Gemäß einem alternativen Aspekt betrifft die vorliegende Erfindung eine Belagsmatte für einen Stallbodenbelag, umfassend einen mit elastischem Material aufgebauten Mattenkörper und auf einer Oberseite des Mattenkörpers eine Haftmateriallage mit darin eingebetteten Hartstoffpartikeln.

Bei dieser Variante der Erfindung sind also die Hartstoffpartikel nicht unmittelbar in den Mattenkörper eingebettet, sondern auf diesen aufgebracht. Dies ermöglicht es, den Mattenkörper selbst ohne Berücksichtigung der vorzusehenden Hartstoffpartikel mit den optimalen Herstellungsbedingungen zu fertigen und erst nachfolgend die Hartstoffpartikel aufzubringen bzw. durch den Einsatz des Haftmaterials fest an der Oberseite der Belagsmatte vorzusehen, so dass dort die gewünschte abrasive Eigenschaft erhalten werden kann.

Dabei kann beispielsweise vorgesehen sein, dass das Haftmaterial Polyurethanharz-basierend, Elastomerbindemittel, Gummi-Metall-Bindemittel, Epoxidharz oder silanmodifiziertes Polymer (SPPO) ist.

Gemäß einem weiteren Aspekt betrifft die vorliegende Erfindung eine Belagsmatte für einen Stallbodenbelag, umfassend einen mit elastischem Material aufgebauten Mattenkörper und auf einer Oberseite des Mattenkörpers eine Schmirgelleinenlage.

Bei dieser Variante werden der Mattenkörper einerseits und die die abrasive Eigenschaft bereitstellende Lage andererseits grundsätzlich separat voneinander hergestellt und dann miteinander fest verbunden. Dies gestattet es, insbesondere die abrasive Eigenschaft durch entsprechende Auswahl der Schmirgelleinenlage den auftretenden Anforderungen sehr gut angepasst auszuwählen. Es ist in diesem Zusammenhang darauf hinzuweisen, dass mit dem Ausdruck "Schmirgelleinen" keinerlei Beschränkung hinsichtlich der Aufbaumaterialien dieser Schmirgelleinenlage bzw. der Struktur derselben eingeführt wird. Grundsätzlich ist mit diesem Ausdruck eine Lage angesprochen, die eine Trägerstruktur mit Faser- bzw. Fadenaufbau, beispielsweise gewebeartig, umfasst, auf welcher durch ein Haftmaterial abrasive Partikel verankert sind.

Die feste Verbindung der Schmirgelleinenlage mit dem Mattenkörper kann beispielsweise dadurch erlangt werden, dass die Schmirgelleinenlage auf der Oberseite des Mattenkörpers durch eine Haftmateriallage festgelegt ist, wobei vorzugsweise vorgesehen sein kann, dass das Haftmaterial Polyurethanharz-basierend, Elastomerbindemittel, Gummi-Metall-Bindemittel, Epoxidharz oder silanmodifiziertes Polymer (SPPO) ist.

Die vorliegende Erfindung betrifft ferner einen Stallboden, umfassend einen Untergrund und auf dem Untergrund einen Stallbodenbelag mit wenigstens einer erfindungsgemäßen Belagsmatte.

Dabei ist vorzugsweise vorgesehen, dass die wenigstens eine Belagsmatte mit einer Unterseite dem Untergrund zugewandt positioniert ist und mit einer zum Betreten durch Tiere ausgebildeten Oberseite vom Untergrund abgewandt positioniert ist.

Die Erfindung wird nachfolgend mit Bezug auf die beiliegenden Figuren detailliert beschrieben. Es zeigt:
- Fig. 1: eine Vertikalschnittansicht eines Stallbodens;
- Fig. 2: eine Zwischenstufe bei der Herstellung einer Belagsmatte für den Stallboden der Fig. 1;
- Fig. 3: eine Teil-Schnittansicht einer beim Stallboden der Fig. 1 eingesetzten Belagsmatte;
- Fig. 4: einen alternativen Aufbau einer Belagsmatte.

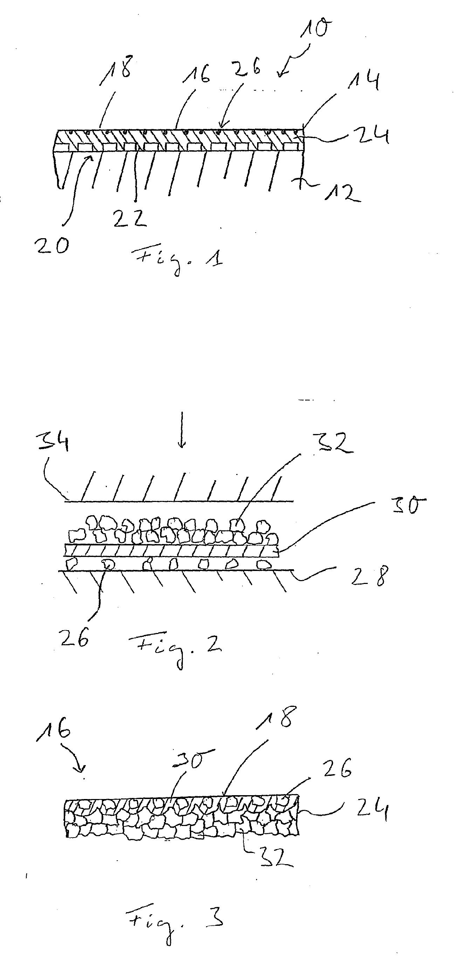

Die Fig. 1 zeigt einen vorzugsweise in einem Rinderstall einzusetzenden Stallboden 10 mit einem festen Untergrund 12, beispielsweise gefertigt aus Beton, und einem darauf liegenden Stallbodenbelag 14 mit einer Mehrzahl von nebeneinander liegend auf dem festen Untergrund 12 positionierten und beispielsweise daran auch durch Verschraubung oder dergleichen verankerten Belagsplatten 16. Diese weisen eine zum Betreten durch Tiere vorgesehene und beispielsweise auch mit einer Strukturierung ausgebildete Oberseite 18 an der dem Untergrund 12 abgewandten Seite sowie eine zur Auflage auf dem Untergrund 12 ausgebildete Unterseite 20 auf. Diese kann mit einer eine Vielzahl von bei Belastung sich verformenden und somit einfedernden Vorsprüngen 22 ausgebildet sein, deren Vorsprungshöhe, Querabmessung und ggf. auch Verbindung untereinander durch Zwischenwandungen die Elastizität einer derartigen Belagsmatte beeinflussen.

Um die in einem Tierstall allgemein gewünschte Elastizität zu erhalten, ist eine derartige Belagsmatte 16 mit einem mit elastischem Material aufgebauten Mattenkörper 24 ausgebildet. Das elastische Material kann im Wesentlichen Gummimaterial sein, wobei in seinem wesentlichen Volumenbereich der Mattenkörper 14 aus Altgummigranulat mit einer Vielzahl von durch Wiederaufbereitung von Altgummi, beispielsweise Autoreifen, gewonnenen Gummigranulatpartikeln aufgebaut ist. Diese sind miteinander durch Vulkanisieren oder Haftmaterial, wie z.B. Polyurethan-Material, durch Wärme und Druckanwendung fest verbunden. Durch Einsatz entsprechender Formen kann bei diesem Verbindungsvorgang auch die an der Unterseite 20 vorgesehene Strukturierung mit der Vielzahl von Vorsprüngen 22 ebenso wie die Oberseitenstrukturierung an der zum Betreten vorgesehenen Oberseite 18 gebildet werden.

In seinem der Oberseite 18 nahe liegenden Volumenbereich enthält der Mattenkörper 14 eine Vielzahl von Hartstoffpartikeln 26. Diese beispielsweise aus Korund, Quarz oder Siliziumkarbid aufgebauten Partikel haben vorzugsweise eine eckige, beispielsweise kubische, Formgebung und eine Größe, die für den Großteil der Partikel im Bereich zwischen 1 mm und 4 mm, vorzugsweise bei etwa 2 mm, liegt. Durch ihre eckige, scharfkantige Ausgestaltung entfalten die Hartstoffpartikel 26 an der Oberseite 18 beim Betreten durch Tiere eine abrasive Eigenschaft, welche die natürliche Abnützung der Hufe bzw. Klauen unterstützt.

Zur Herstellung einer derartigen Belagsmatte 16 kann beispielsweise so vorgegangen werden, dass in ein in Fig. 2 erkennbares Formteil 28 die Hartstoffpartikel 26 eingebracht werden. Auf die Hartstoffpartikel 26, welche an der Oberseite 18 die abrasive Eigenschaft entfalten sollen, wird zunächst eine Lage 30 aus Neugummimaterial, also noch nicht vernetztem bzw. vulkanisiertem Gummimaterial aufgebracht. Die Dicke der Lage 30 liegt vorzugsweise im Bereich der Abmessung der Hartstoffpartikel 26, also im Bereich von 1 mm bis 2 mm. Auf die Lage 30 werden dann die Gummigranulatpartikel 32 aufgestreut, die den wesentlichen Volumenbereich des Mattenkörpers 14 bilden werden. Durch ein weiteres Formteil 34, das von oben herangeführt wird, wird dann bei entsprechender Erwärmung Druck ausgeübt, der dazu führt, dass einerseits die einzelnen Gummigranulatpartikel 32 miteinander verbunden werden und auch mit der Lage 30 verbunden werden, und dass andererseits die Hartstoffpartikel 26 sich in die Lage 30 eindrücken bzw. von deren Material umgeben werden. Der dabei entstehende Verbund ist in Fig. 3 gezeigt. Man erkennt nahe der Oberseite 18 die Hartstoffpartikel 26, umgeben von dem schraffiert dargestellten Material der Lage 30. Dieses beim Herstellungsvorgang erstmals vernetzte bzw. vulkanisierte Gummimaterial stellt eine sehr stabile Anbindung der Hartgummipartikel 26 an den Mattenkörper 24 sicher. An der von der Oberseite 18 abgewandten Rückseite des Materials der Lage 30 liegen dann die vielen miteinander fest verbundenen und auch mit dem Material der Lage 30 fest verbundenen Gummigranulatpartikel 32.

Bei der Herstellung einer derartigen Belagsmatte 16 werden durch das Einbringen in das Formteil 28 die Hartstoffpartikel 26 sich primär in demjenigen Volumenbereich des Mattenkörpers 24 ansammeln, welcher im späteren Gebrauch in unmittelbarem Kontakt mit den Hufen bzw. Klauen der eine derartige Belagsmatte betretenden Tiere kommt. Dabei können, bedingt durch den Herstellungsprozess, die Hartstoffpartikel 26 im Neuzustand der Belagsmatten 16 durch eine sehr dünne Gummischicht überdeckt sein, die sich jedoch nach vergleichsweise kurzer Gebrauchsdauer abnutzen wird, so dass die Hartstoffpartikel 26 mit ihren nach oben hin orientierten Ecken oder Kantenbereichen frei liegen und ihre abrasive Wirkung entfalten können. Um diese Phase der ersten Abnutzung zu verkürzen bzw. zu vermeiden, können selbstverständlich bei der Herstellung beispielsweise durch Einfügen eines Abbürstvorgangs mit Stahlbürsten oder dergleichen die Hartstoffpartikel 26 in ihrem der Oberseite 18 nahe liegenden Bereich freigelegt werden.

Mit dem erfindungsgemäßen Aufbau der Belagsmatten 16 wird es möglich, einen Stallbodenbelag 14 vorzusehen, der insbesondere hinsichtlich der abrasiven Eigenschaft an die tatsächlich auftretenden Anforderungen angepasst ist. Dort, wo eine stärkere abrasive Eigenschaft erforderlich ist, können Belagsmatten mit höherem Hartstoffpartikelanteil nahe der Oberseite 18 eingesetzt werden, als dort, wo nur eine geringere Abnutzung erforderlich oder gewünscht ist. In Bereichen, in welchen die Tiere primär liegen, kann ein weiter geminderter Hartstoffpartikelanteil vorgesehen sein, oder es können dort beispielsweise Belagsmatten ohne Hartstoffpartikel vorgesehen sein. Es ist also möglich, einen Stallboden bzw. den Stallbodenbelag 14 modulartig auszugestalten und die abrasive Eigenschaft durch Einsatz bzw. Auswahl entsprechend aufgebauter Belagsmatten über den Stallboden 10 verteilt variiert gestaltet werden. Hier kann die Einstellung der abrasiven Eigenschaft nicht nur durch die Auswahl von Belagsmatten mit verschiedenen Dichten der Hartstoffpartikel 26 an der Oberseite 18 erfolgen. Alternativ oder zusätzlich ist es möglich, die abrasive Eigenschaft durch die Art bzw. auch die Formgebung bzw. Größe der eingesetzten Hartstoffpartikel zu variieren. Dort, wo eine stärkere Abnutzung erforderlich ist, also beispielsweise in den durch Tiere primär übergangenen Bereichen, werden Belagsmatten mit stärkerer abrasiver Eigenschaft verlegt, während dort, wo abrasive Eigenschaften weniger erforderlich sind, Belagsmatten mit geringerer abrasiver Eigenschaft oder ohne abrasive Eigenschaft eingesetzt werden können.

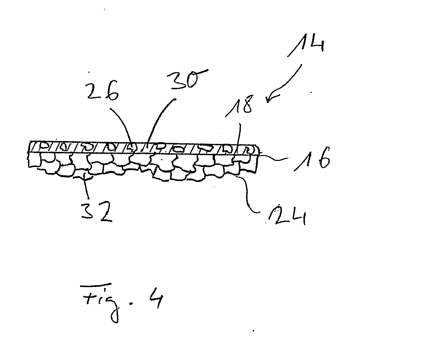

Bei einer in Fig. 4 dargestellten alternativen Ausgestaltungsform kann vorgesehen sein, dass die Hartstoffpartikel 26 nicht in den mit Gummimaterial aufgebauten Mattenkörper 24 selbst eingebettet, sondern nach dessen Fertigung auf die Oberseite 18 desselben aufgebracht werden. Hierzu kann beispielsweise so vorgegangen werden, dass auf eine derartige Oberseite 18 zunächst eine Schicht von fließfähigem und noch nicht ausgehärtetem Haftmaterial 30, beispielsweise Polyurethanharz-basierend, Elastomerbindemittel, Gummi-Metall-Bindemittel, Epoxidharz oder silanmodifiziertes Polymer (SPPO), aufgebracht wird und in diesen noch nicht ausgehärteten Haftmaterial 70 dann die Hartstoffpartikel 26 mit der gewünschten Verteilung eingestreut werden. Da hier nur eine vergleichsweise dünne fließfähige und die Hartstoffpartikel 26 aufnehmende Lage des Haftmaterials 30 aufgebracht wird, dessen Dicke beispielsweise näherungsweise der Abmessung der Hartstoffpartikel 26 entsprechen kann, wird ein Durchsacken der Haftstoffpartikel 26 auf den Untergrund so weit, dass sie nachfolgend nicht mehr zur Verstärkung oder Bereitstellung der abrasiven Eigenschaft beitragen können, weitestgehend vermieden. Das Haftmaterial 30 kann nach dem Einbringen der Hartstoffpartikel dann beispielsweise durch Wärmeanwendung ausgehärtet werden.

Um die Haftwirkung des Haftmaterials 30 an der Oberseite 18 des mit Gummimaterial aufgebauten Mattenkörpers 24 zu verbessern, ist es möglich, vor dem Aufbringen des Haftmaterials 30 einen Haftvermittler, beispielsweise einen Acrylat-basierenden Haftvermittler auf die Oberseite 18 aufzubringen. Hier hat sich insbesondere Cyanacrylat-basierender Haftvermittler, wie z.B. Ethyl-2-Cyanacrylat, als besonders vorteilhaft erwiesen.

Der Mattenkörper 24 kann so, wie vorangehend beschrieben, aufgebaut sein.

Unabhängig davon, ob die Hartstoffpartikel in den Mattenkörper eingebracht, also eingebettet oder auf diesen aufgebracht werden, wird es leicht möglich die Flächendichte der Hartstoffpartikel auszuwählen bzw. auch über eine Belagsmatte hinweg zu variieren.

Bei einer weiteren alternativen Ausgestaltungsvariante kann vorgesehen sein, dass auf einen mit elastischem Material aufgebauten Mattenkörper, welcher so aufgebaut sein kann, wie vorangehend dargelegt, eine separat hergestellte Lage zum Bereitstellen der abrasiven Eigenschaft aufgebracht wird. Hierzu kann beispielsweise so genanntes Schmirgelleinen verwendet werden, das durch ein Haftmaterial, beispielsweise Polyurethanharz-basierend, Elastomerbindemittel, Gummi-Metall-Bindemittel, Epoxidharz oder silanmodifiziertes Polymer (SPPO), auf der Oberseite des Mattenkörpers festgelegt wird. Derartiges Schmirgelleinen kann hinsichtlich seiner abrasiven Eigenschaft in einem weiten Bereich ausgewählt werden, so dass für verschiedene Einsatzzwecke bzw. Anforderungen entsprechend angepasste Belagsmatten bereitgestellt werden können.

## Patentansprüche

1. Belagsmatte für einen Stallbodenbelag, umfassend einen mit elastischem Material aufgebauten Mattenkörper (24) mit in einem oberflächennahen Bereich eingebetteten Hartstoffpartikeln (26).

2. Belagsmatte nach Anspruch 1,
**dadurch gekennzeichnet, dass** der Mattenkörper (24) mit miteinander verbundenen Gummigranulatpartikeln (32) aufgebaut ist.

3. Belagsmatte nach Anspruch 2,
**dadurch gekennzeichnet, dass** die Gummigranulatpartikel (32) durch Wiederaufbereitung von Altgummi gewonnen sind.

4. Belagsmatte nach Anspruch 3,
**dadurch gekennzeichnet, dass** die Gummigranulatpartikel (26) miteinander durch Vulkanisation oder Haftmaterial, vorzugsweise PU-Material, verbunden sind.

5. Belagsmatte nach einem der Ansprüche 1 bis 4,
**dadurch gekennzeichnet, dass** der Mattenkörper (24) in seinem die Hartstoffpartikel (26) enthaltenden Volumenbereich mit bei seiner Herstellung erstmals vernetztem Neugummimaterial (30) aufgebaut ist.

6. Belagsmatte nach Anspruch 5,
**dadurch gekennzeichnet, dass** die mit dem Neugummimaterial aufgebaute Lage (30) des Mattenkörpers (24) eine Dicke aufweist, die im Bereich der Partikelgröße der Hartstoffpartikel (26) ist.

7. Belagsmatte nach einem der Ansprüche 1 bis 6,
**dadurch gekennzeichnet, dass** die Hartstoffpartikel (26) Korundpartikel, Quarzpartikel oder/und Siliziumkarbidpartikel umfassen.

8. Belagsmatte nach einem der Ansprüche 1 bis 7,
**dadurch gekennzeichnet, dass** die Hartstoffpartikel (26) nahe einer zum Betreten durch Tiere ausgebildeten Oberseite (18) des Mattenkörpers (24) vorgesehen sind.

9. Belagsmatte nach Anspruch 8,
**dadurch gekennzeichnet, dass** die Hartstoffpartikel (26) im Wesentlichen nur nahe der Oberseite (18) vorgesehen sind.

10. Belagsmatte nach einem der Ansprüche 1 bis 9,
**dadurch gekennzeichnet, dass** die Hartstoffpartikel (26) eine Größe im Bereich von 1 mm bis 4 mm, vorzugsweise etwa 2 mm, aufweisen.

11. Belagsmatte für einen Stallbodenbelag, umfassend einen mit elastischem Material aufgebauten Mattenkörper (24) und auf einer Oberseite (18) des Mattenkörpers eine Haftmateriallage (30) mit darin eingebetteten Hartstoffpartikeln (26).

12. Belagsmatte nach Anspruch 11,
**dadurch gekennzeichnet, dass** das Haftmaterial Polyurethanharz-basierend, Elastomerbindemittel, Gummi-Metall-Bindemittel, Epoxidharz oder silanmodifiziertes Polymer (SPPO) ist.

13. Belagsmatte für einen Stallbodenbelag, umfassend einen mit elastischem Material aufgebauten Mattenkörper (24) und auf einer Oberseite (18) des Mattenkörpers eine Schmirgelleinenlage.

14. Belagsmatte nach Anspruch 13,
**dadurch gekennzeichnet, dass** die Schmirgelleinenlage auf der Oberseite des Mattenkörpers durch eine Haftmateriallage festgelegt ist.

15. Belagsmatte nach Anspruch 14,
**dadurch gekennzeichnet, dass** das Haftmaterial Polyurethanharz-basierend, Elastomerbindemittel, Gummi-Metall-Bindemittel, Epoxidharz oder silanmodifiziertes Polymer (SPPO) ist.

16. Stallbaden (10), umfassend einen Untergrund (12) und auf dem Untergrund (12) einen Stallbodenbelag (14) mit wenigstens einer Belagsmatte (16) nach einem der vorangehenden Ansprüche.

17. Stallboden nach Anspruch 16,
**dadurch gekennzeichnet, dass** die wenigstens eine Belagsmatte (16) mit einer Unterseite (20) dem Untergrund (12) zugewandt positioniert ist und mit einer zum Betreten durch Tiere ausgebildeten Oberseite (18) vom Untergrund (12) abgewandt positioniert ist.
